# EUROPEAN PATENT APPLICATION

(11) **EP 1 843 178 A1**
(43) Date of publication of application: **10.10.2007**
(21) Application number: 07006962.0
(22) Date of filing: 03.04.2007
(51) Int. Cl.: G02B 1/04, G02B 6/122, G02B 6/138

(54) **Process for producing optical waveguide**

(30) Priority: 04.04.2006 JP 2006103399
(71) Applicant: NITTO DENKO CORPORATION, Osaka (JP)
(72) Inventor: Shimizu, Yusuke c/o Nitto Denko Corporation, Osaka (JP)
(74) Representative: Grünecker, Kinkeldey, Stockmair & Schwanhäusser Anwaltssozietät

(57) **Abstract**

The present invention relates to a process for producing an optical waveguide, which comprises forming an undercladding layer on a surface of a substrate; forming a photosensitive resin composition layer on the undercladding layer; irradiating a surface of the photosensitive resin composition layer with ultraviolet through a photomask having a given pattern to conduct an exposure; removing an unexposed area of the photosensitive resin composition layer after the exposure by dissolving the unexposed area with a developing liquid to thereby form a core layer; and forming an overcladding layer on the core layer, in which the developing liquid is an aqueous γ-butyrolactone solution having a concentration of from 10 to 99% by weight. According to the process, it is possible to obtain an optical waveguide in which neither the core layer itself nor the interface between the core layer and the undercladding layer cracks and which has a small light loss.

## Description

### FIELD OF THE INVENTION

The present invention relates to a process for producing an optical waveguide which is extensively used in optical communication, optical information processing, and other general optical fields.

### BACKGROUND OF THE INVENTION

Optical waveguides are incorporated in optical waveguide devices, optical integrated circuits, and optical wiring boards and are in extensive use in optical communication, optical information processing, and other general optical fields. Techniques for producing such an optical waveguide using a photosensitive resin such as an ultraviolet-curable resin have come to be practiced in recent years. Examples thereof include a process which includes forming a lower cladding layer (undercladding layer) on a substrate, thereafter forming a photosensitive resin layer on the cladding layer, irradiating the resin layer with light to expose it, subsequently developing the resin layer with a developing liquid to remove the unexposed areas and thereby forming a core layer having a given pattern, and then forming an upper cladding layer (overcladding layer) over the core layer to produce an optical waveguide. In such steps for producing an optical waveguide, the developing liquid used for developing the photosensitive resin layer and removing the unexposed areas of the layer is, for example, acetone (see patent document 1).
Patent Document 1: JP-A-2000-356720

### SUMMARY OF THE INVENTION

However, the use of acetone as a developing liquid in forming the core layer has posed a problem that the core layer itself or the interface between the core layer and the lower cladding layer (undercladding layer) cracks by the action of the acetone, whereby the function of the optical waveguide is deteriorated.

The invention has been achieved under such circumstances. An object of the invention is to provide a process for producing an optical-waveguide, the process being capable of yielding an optical waveguide in which neither the core layer itself nor the interface between the core layer and the undercladding layer cracks and which has a small light loss.

### BRIEF DESCRIPTION OF THE DRAWINGS

Fig. 1 is a cross-sectional view illustrating a step in one embodiment of the process for optical-waveguide production of the invention.
Fig. 2 is a cross-sectional view illustrating another step in the embodiment of the process for optical-waveguide production of the invention.
Fig. 3 is a cross-sectional view illustrating still another step in the embodiment of the process for optical-waveguide production of the invention.
Fig. 4 is a cross-sectional view illustrating a further step in the embodiment of the process for optical-waveguide production of the invention.
Fig. 5 is a cross-sectional view illustrating the structure of the optical waveguide obtained by the embodiment of the process for optical-waveguide production of the invention.

### Description of Reference Numerals

1 substrate
2 undercladding layer
3 core layer
4 overcladding layer
5 resin layer
6 mask

### DETAILED DESCRIPTION OF THE INVENTION

Namely, the present invention relates to the followings.
(1) A process for producing an optical waveguide, which comprises:
   forming an undercladding layer on a surface of a substrate;
   forming a photosensitive resin composition layer on the undercladding layer;
   irradiating a surface of the photosensitive resin composition layer with ultraviolet through a photomask having a given pattern to conduct an exposure;
   removing an unexposed area of the photosensitive resin composition layer after the exposure by dissolving the unexposed area with a developing liquid to thereby form a core layer; and
   forming an overcladding layer on the core layer,
   wherein the developing liquid is an aqueous γ-butyrolactone solution having a concentration of from 10 to 99% by weight.
(2) The process for producing an optical waveguide according to (1), wherein the aqueous γ-butyrolactone solution has a concentration of from 75 to 85% by weight.
(3) The process for producing an optical waveguide according to (1), wherein the undercladding layer comprises a thermosetting resin or thermoplastic resin.
(4) The process for producing an optical waveguide according to (1), wherein the undercladding layer comprises an epoxy resin composition.
(5) The process for producing an optical waveguide according to (1), wherein the photosensitive resin composition layer comprises a photocurable epoxy resin composition.
(6) The process for producing an optical waveguide according to (1), wherein the overcladding layer comprises a thermosetting resin or thermoplastic resin.
(7) The process for producing an optical waveguide according to (1), wherein the overcladding layer comprises an epoxy resin composition.

The present inventor made investigations on causes of the cracking occurring in the core layer or at the interface between the core layer and the undercladding layer in order to inhibit the core layer part from cracking and thereby obtain a satisfactory optical waveguide reduced in light loss. In the course of the investigations, it was found that one of the causes of the cracking is related to the developing liquid used for forming the pattern which becomes the core layer. Based on this finding, intensive investigations have been made in order to obtain a developing liquid which does not cause cracking in the core layer or at the interface between the core layer and the undercladding layer and is capable of forming a satisfactory core layer pattern. As a result, the inventor reached an idea to employ γ-butyrolactone, which has not been used hitherto at all, as a developing liquid in forming a core layer. The inventor made further investigations and, as a result, found that the object is accomplished when an aqueous γ-butyrolactone solution having a specific concentration is used. The invention has been thus achieved.

Namely, the process of the invention includes forming a photosensitive resin composition layer on an undercladding layer formed on a surface of a substrate, irradiating a surface of the photosensitive resin composition layer with ultraviolet through a photomask having a given pattern to conduct an exposure, removing an unexposed area of the photosensitive resin composition layer after the exposure by dissolving the area with a developing liquid to thereby form a core layer, and then forming an overcladding layer over the core layer to thereby produce an optical waveguide. As the developing liquid, an aqueous γ-butyrolactone solution having a specific concentration is employed. Accordingly, the core layer part does not crack in the formation of a core layer pattern and a core layer having a high-precision pattern can be formed. As a result, an optical waveguide having a small light loss and excellent reliability can be efficiently produced.

When the concentration of the aqueous γ-butyrolactone solution is regulated to 75 to 85% by weight and, for example, a photocurable epoxy resin composition is used as the photosensitive resin composition as a core layer formation material, then pattern resolution can be improved and a more precise core layer pattern can be obtained.

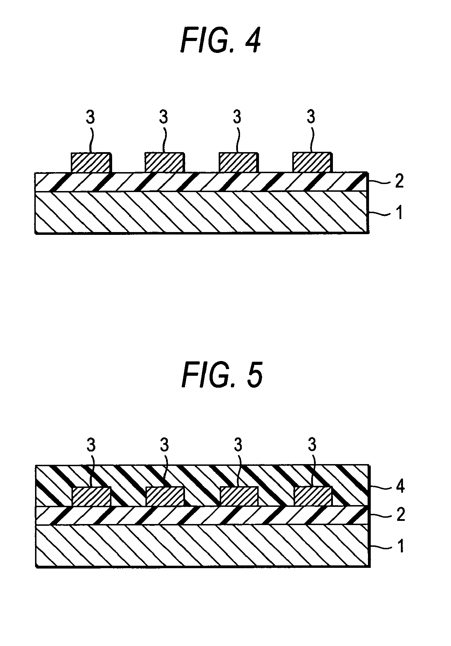

One example of optical waveguides obtainable by the optical-waveguide production process of the invention has the layer constitution shown in Fig. 5. This optical waveguide includes a substrate 1, an undercladding layer 2 disposed on the substrate 1, a core layer 3 having a given pattern and disposed on the undercladding layer 2, and an overcladding layer 4 formed so as to cover the core layer 3.

The material of the substrate 1 is not particularly limited. Examples thereof include conventional materials such as quartz glass plates, silicon wafers, ceramics substrates, glass-epoxy resin substrates, polyimide films, poly(ethylene terephthalate) (PET) films, and metal foils including copper foils and stainless-steel foils. The thickness thereof may be suitably selected, and it is generally in the range of from 10 µm to 5 mm.

For forming the undercladding layer 2 on the substrate 1, use may be made of any of various polymeric materials such as thermosetting resins and thermoplastic resins. It is, however, necessary that the material constituting the undercladding layer 2 should have a lower refractive index than the material constituting the core layer 3. Specifically, it is preferred to design the layers so that the difference between the refractive index of the core layer 3 and that of the undercladding layer 2 is about 0.1 to 5%.

Examples of such materials for forming the undercladding layer 2 include epoxy resins and polyimide resin precursors. It is preferred to select one which has a sufficient adhesion to the photosensitive resin composition to be used as a material for forming the core layer 3. From this standpoint, when an ultraviolet-curable epoxy resin composition, for example, is to be used as a material for forming the core layer 3, it is preferred to use an epoxy resin composition also as the material for forming the undercladding layer 2.

Examples thereof include epoxy compounds such as alicyclic epoxy compounds including 3,4-epoxycyclohexenylmethyl 3,4-epoxycyclohexenecarboxylate and 3,4-epoxycyclohexenylethyl 3,4-epoxycyclohexenecarboxylate, bisphenol A epoxy resins, bisphenol F epoxy resins, hydrogenated bisphenol A epoxy resins, hydrogenated bisphenol F epoxy resins, naphthalene epoxy resins, aliphatic epoxy resins, and fluorinated epoxy resins. These may be used alone or in combination of two or more thereof. It is preferred to use alicyclic epoxy compounds among those epoxy compounds because they give resins having high transparency and high heat resistance.

A photopolymerization initiator is usually used in the epoxy resin in order to impart ultraviolet curability. The photopolymerization initiator is not particularly limited. Examples thereof include conventional ones such as aromatic diazonium salts, aromatic sulfonium salts, aromatic iodonium salts, aromatic sulfoxonium salts, metallocene compounds, and iron-arene compounds. From the standpoint of photocurability, it is preferred to use aromatic sulfonium salts among these. In particular, an aromatic sulfonium hexafluoroantimonate compound such as 4,4-bis[(di(β-hydroxyethoxy)phenylsulfinio)phenyl sulfide bishexafluoroantimonate, an aromatic sulfonium hexafluorophosphonium compound, or a combination thereof is preferred from the standpoints of curability, adhesion, and the like. Besides the photopolymerization initiator, additives such as a photosensitizer and an acid multiplier can be suitably added according to the necessity.

The amount of the photopolymerization initiator to be incorporated is preferably from 0.1 to 10 parts by weight, more preferably from 1 to 5 parts by weight, with respect to 100 parts by weight of the epoxy resin ingredient.

Furthermore, for enhancing adhesion, compounds such as a silane or titanate coupling agent and a flexibility-imparting agent such as an olefin oligomer, cycloolefin oligomer or polymer such as a norbornene polymer, synthetic rubber, or silicone compound, and other ingredients including an antioxidant and an antifoamer may be added to the material for forming the undercladding layer 2 according to the necessity.

For forming the core layer 3 having a given pattern on the undercladding layer 2, a photosensitive resin composition is used and, for example, a photocurable epoxy resin composition is used. The material for forming the core layer 3 is required to be transparent, after the curing, at the wavelength to be used for light signals (e.g., 850 nm or 1,300 nm).

Besides an epoxy resin, a photopolymerization initiator is used in the photocurable epoxy resin composition in order to impart ultraviolet curability.

Examples of the epoxy resin include epoxy compounds such as fluorene derivatives including bisphenoxyethanol fluorene diglycidyl ether and bisphenol fluorene diglycidyl ether, alicyclic epoxy compounds including 3,4-epoxycyclohexenylmethyl 3,4-epoxycyclohexenecarboxylate and 3,4-epoxycyclohexenylethyl 3,4-epoxycyclohexenecarboxylate, bisphenol A epoxy resins, bisphenol F epoxy resins, hydrogenated bisphenol A epoxy resins, hydrogenated bisphenol F epoxy resins, naphthalene epoxy resins, aliphatic epoxy resins, and fluorinated epoxy resins. These may be used alone or in combination of two or more thereof. It is preferred to use bisphenoxyethanol fluorene diglycidyl ether or an alicyclic epoxy compound among those epoxy compounds because they give a cured resin having a high refractive index and satisfactory transparency and have satisfactory solubility.

The photopolymerization initiator is not particularly limited, and examples thereof include conventional ones such as aromatic diazonium salts, aromatic sulfonium salts, aromatic iodonium salts, aromatic sulfoxonium salts, metallocene compounds, and iron-arene compounds. From the standpoint of photocurability, it is preferred to use aromatic sulfonium salts among these. In particular, an aromatic sulfonium hexafluoroantimonate compound such as 4,4-bis[(di(β-hydroxyethoxy)phenylsulfinio)phenyl sulfide bishexafluoroantimonate, an aromatic sulfonium hexafluorophosphonium compound, or a combination thereof is preferred from the standpoints of curability, adhesion, and the like. Besides the photopolymerization initiator, additives such as a photosensitizer and an acid multiplier can be suitably added according to the necessity.

The amount of the photopolymerization initiator to be incorporated is preferably from 0.1 to 10 parts by weight, more preferably from 1 to 5 parts by weight, with respect to 100 parts by weight of the epoxy resin ingredient.

Furthermore, for enhancing adhesion, compounds such as a silane or titanate coupling agent and a flexibility-imparting agent such as an olefin oligomer, cycloolefin oligomer or polymer such as a norbornene polymer, synthetic rubber, or silicone compound, and other ingredients including an antioxidant and an antifoamer may be added to the photosensitive resin composition according to need.

For forming the overcladding layer 4 over the core layer 3 formed so as to have a given pattern, use may be made of any of various polymeric materials such as thermosetting resins and thermoplastic resins. However, it is preferred to use the same material as that used for forming the undercladding layer 2.

One embodiment of the process for optical-waveguide production of the invention is explained below, in which the substrate and layer-forming materials described above are used.

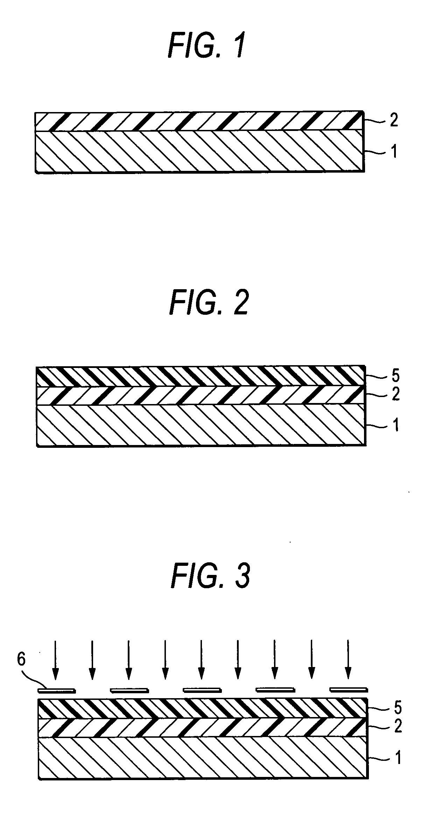

First, a material for undercladding layer formation is applied to a substrate 1 so as to have a thickness of preferably from 5 to 100 µm after the drying and the coating is then dried to form an undercladding layer 2 as shown in Fig. 1. In the case that the material for undercladding layer formation is an ultraviolet-curable resin composition, the coating is irradiated with ultraviolet to form an undercladding layer 2. After the drying or ultraviolet irradiation, the layer may be cured by heating and the like, according to the necessity.

For applying the material for undercladding layer formation, use may be made, for example, of a coating technique using a spin coater, coater, ring coater, bar coater, or the like, screen printing, method in which spaces are used to form a gap and the material is injected into the gap by the capillary phenomenon, or method in which the substrate is successively coated in a roll-to-roll manner with a coating machine such as a multicoater.

For the purpose of improving the adhesion between the undercladding layer 2 and the substrate 1, the side of the substrate 1 on which the undercladding layer 2 is to be formed may be subjected to a surface treatment with a silane coupling agent or an aluminum chelating agent.

Subsequently, a photosensitive resin composition is used to form a resin layer 5 on the undercladding layer 2 as shown in Fig. 2. Examples of methods for forming the resin layer 5 include the same coating techniques as those usable in applying the material for undercladding layer formation.

Thereafter, as shown in Fig. 3, the resin layer 5 is subjected to a light irradiation such as an exposure to ultraviolet, through a mask 6 having a given pattern. This exposure is not particularly limited, and examples thereof include contact exposure, proximity exposure in which the mask 6 and the resin layer 5 are slightly spaced from each other in conducting the exposure, and projection exposure. From the standpoint of further improving precision, it is preferred to employ contact exposure or proximity exposure. It is also preferred that in the exposure to ultraviolet, parallel rays be used by employing a filter or the like.

Furthermore, it is preferred to dispose a protective layer over the resin layer 5 prior to the exposure in order to prevent the photosensitive resin composition as a material for core layer formation from adhering to and fouling the surface of the mask 6. Examples of the material constituting the protective layer include materials having a high light transmittance, such as PET films and glasses. Although the thickness of the protective layer is not particularly limited, it is preferably in the range of from 30 to 200 µm. The reasons for this are as follows. In the case that the material has too small a thickness of less than 30 µm, it is apt to bend. On the other hand, in the case that the material has too large a thickness of more than 200 µm, it tends to have reduced ultraviolet transmission. The surface of the protective layer on the side of resin layer 5 may be subjected to a releasability-imparting treatment. Examples of methods usable for this surface treatment include the same surface treatment technique as that for improving adhesion between the substrate 1 and the undercladding layer 2 described above.

After the exposure, development is conducted using an aqueous γ-butyrolactone solution having the specific concentration (developing liquid) to dissolve away the unexposed area of the resin layer 5. Thus, a core layer 3 having the given pattern is formed as shown in Fig. 4. For the development, conventional techniques can be used, such as paddle development, dipping, and spraying. After the development, washing may be conducted according to the necessity. For the washing, an alcohol such as isopropyl alcohol, distilled water, or the like can, for example, be used. Post-cure may be further conducted in order to more completely cure the core layer 3 formed.

The aqueous γ-butyrolactone solution to be used as a developing liquid should be regulated so as to have a concentration in the range of from 10 to 99% by weight. Especially, the concentration thereof is preferably regulated to 75 to 85% by weight. In the case that a photocurable epoxy resin composition, for example, is used as the photosensitive resin composition as a material for forming the core layer 3, by regulating the concentration to that value improves the pattern resolution of the core layer 3 and a more precise core layer pattern can be obtained. In the case that the concentration of the aqueous γ-butyrolactone solution is too low, developing is insufficient and a desired pattern cannot be formed. On the other hand, when the concentration is too high, it results in cracking in the core layer 3 and in deformation or falling of the core layer pattern. Thus, the concentration of the aqueous γ-butyrolactone solution can be suitably regulated in that range according to the kind of the photosensitive resin composition as a material for core layer formation to thereby regulate the rate of development.

Subsequently, the material for overcladding layer formation described above is used to form an overcladding layer 4 over the undercladding layer 2 on which the core layer 3 having the given pattern has been formed, as shown in Fig. 5. Examples of methods usable for forming the overcladding layer 4 include the same methods as those for forming the undercladding layer 2 as described above. It is preferred that the material to be used for forming the overcladding layer 4 be the same as the material used for forming the undercladding layer 2. Thus, an optical waveguide is produced so as to include a substrate 1, an undercladding layer 2 disposed on the substrate 1, a core layer 3 having a given pattern and disposed on the undercladding layer 2, and an overcladding layer 4 formed so as to cover the core layer 3.

Examples of the optical waveguide thus obtained include straight optical waveguides, bend optical waveguides, crossing optical waveguides, γ-branched optical waveguides, slab optical waveguides, Mach-Zehender type optical waveguides, AWG type optical waveguides, grating optical waveguides, and optical waveguide lenses. Examples of optical elements employing such optical waveguides include wavelength filters, optical switches, optical branch units, optical multiplexers, optical multiplexers/demultiplexers, optical amplifiers, wavelength modulators, wavelength division multiplexers, optical splitters, directional couplers, and optical transmission modules having a laser diode or photodiode hybrid-integrated therewith.

The invention will be explained below by reference to Examples and a Comparative Example. However, the invention is not limited to these Examples.

### EXAMPLE 1

### Preparation of Material for Core Layer Formation

A hundred parts by weight of bisphenoxyethanol fluorene diglycidyl ether as an epoxy resin was mixed with 1 part by weight of 4,4-bis[di(β-hydroxyethoxy)phenylsulfinio]phenyl sulfide bishexafluoroantimonate as a photo-acid generator (photopolymerization initiator) to prepare a photocurable epoxy resin composition.

### Preparation of Material for Undercladding Layer Formation and Overcladding Layer Formation

A hundred parts by weight of 3,4-epoxycyclohexenylmethyl 3,4-epoxycyclohexenecarboxylate as an epoxy resin was mixed with 1 part by weight of 4,4-bis[di(β-hydroxyethoxy)phenylsulfinio]phenyl sulfide bishexafluoroantimonate as a photo-acid generator (photopolymerization initiator) to prepare a photocurable epoxy resin composition.

### Formation of Undercladding Layer

A glass substrate (12 cm × 12 cm × 1.1 mm (thickness)) was prepared. The material for undercladding layer formation prepared as above was applied to a surface of the substrate with a spin coater under the conditions of 500 rpm × 10 seconds plus 1,000 rpm × 15 seconds. Thereafter, an exposure apparatus employing a high-pressure mercury lamp as a light source was used to conduct overall exposure in an exposure dose of 2,000 mJ/cm². The coating was then cured by heating at 100°C for 60 minutes to thereby form an undercladding layer 2 on the glass substrate 1 as shown in Fig. 1. The undercladding layer 2 thus obtained had a thickness of 20 µm.

### Formation of Core Layer

Subsequently, the material for core layer formation prepared as above was applied to the undercladding layer 2 with a spin coater under the conditions of 500 rpm × 10 seconds plus 1,500 rpm × 15 seconds to form a resin layer 5 as shown in Fig. 2. Next, a synthetic-quartz-based chromium mask 6 in which a linear optical-waveguide pattern having a line width of 50 µm and a length of 10 cm had been drawn was disposed on the resin layer 5 to conduct a contact exposure through the chromium mask 6 as shown in Fig. 3. The exposure conditions included an exposure dose of 3,000 mJ/cm². After the exposure, the thickness of the resin layer 5 was maintained to be at 50 µm. The resin layer 5 was then subjected to a heat treatment at 100°C for 60 minutes to cure the exposed areas only.

Subsequently, the structure which had undergone the heat treatment was immersed in an aqueous γ-butyrolactone solution having a concentration of 70% by weight for 60 seconds, to thereby develop the given pattern (dipping method). Thus, a core layer 3 was formed on the undercladding layer 2 as shown in Fig. 4. This core layer 3 had a sectional shape having a thickness of 50 µm and a line width of 50 µm.

### Formation of Overcladding Layer

The material for overcladding layer formation prepared as above was then applied over the core layer 3 formed so as to have the given pattern, and overall exposure was conducted in an exposure dose of 2,000 mJ/cm² in the same manner as described above. Thereafter, the coating was cured by heating at 100°C for 60 minutes to thereby form an overcladding layer 4 as shown in Fig. 5. The thickness of the parts of the overcladding layer disposed on the core layer 3 was measured and, as a result, was found to be 20 µm. Thus, an optical waveguide having the structure shown in Fig. 5 was produced.

### EXAMPLES 2 TO 4 AND COMPARATIVE EXAMPLE

Optical waveguides were produced in the same manner as in Example 1, except that the concentration of the aqueous γ-butyrolactone solution to be used as a developing liquid was changed as shown in Table 1 given later.

### EVALUATION

Parts of the core layer 3 in each of the optical waveguides thus obtained were visually examined with a microscope to conduct the following evaluations. Namely, the core layer 3 was examined as to (1) whether the core layer 3 had cracks or not and (2) whether there was a development residue remaining around the pattern of the core layer 3 (pattern resolution of the core layer 3). The results of these evaluations are shown in the following Table 1.

**Table 1**

| | Example | | | | Comparative Example |
|---|---|---|---|---|---|
| | 1 | 2 | 3 | 4 | |
| Concentration of aqueous γ-butyrolactone solution (wt%) | 70 | 75 | 85 | 15 | 100 |
| Cracks in core layer | absent | absent | absent | absent | present |
| Resolution of core layer pattern | slight development residue | satisfactory resolution with no development residue | | slight development residue | satisfactory resolution with no development residue |

The results given above show the followings. The optical waveguides of the Examples, in which aqueous γ-butyrolactone solutions having concentrations within the specific range was employed, had no particular problem concerning the pattern resolution of the core layer 3 and had completely no cracks in the core layer 3. In particular, the optical waveguides of Examples 2 and 3, in which aqueous γ-butyrolactone solutions having concentrations of 75% by weight and 85% by weight, respectively, were employed, were satisfactory in the pattern resolution of the core layer 3 and had no cracks in the core layer 3. These two optical waveguides gave highly excellent results.

In contrast, the optical waveguide of Comparative Example, in which a γ-butyrolactone solution having a concentration of 100% by weight was employed, was ascertained to have cracks in the core layer 3.

Examples of optical waveguides obtainable by the process for optical-waveguide production of the invention include straight optical waveguides, bend optical waveguides, crossing optical waveguides, γ-branched optical waveguides, slab optical waveguides, Mach-Zehender type optical waveguides, AWG type optical waveguides, grating optical waveguides, and optical waveguide lenses. Examples of optical elements employing such optical waveguides include wavelength filters, optical switches, optical branch units, optical multiplexers, optical multiplexers/demultiplexers, optical amplifiers, wavelength modulators, wavelength division multiplexers, optical splitters, directional couplers, and optical transmission modules having a laser diode or photodiode hybrid-integrated therewith.

While the present invention has been described in detail and with reference to specific embodiments thereof, it will be apparent to one skilled in the art that various changes and modifications can be made therein without departing from the scope thereof.

This application is based on Japanese patent application No. 2006-103399 filed April 4, 2006, the entire contents thereof being hereby incorporated by reference.

Further, all the documents described herein are hereby incorporated by reference.

## Claims

1. A process for producing an optical waveguide, which comprises:
forming an undercladding layer on a surface of a substrate;
forming a photosensitive resin composition layer on the undercladding layer;
irradiating a surface of the photosensitive resin composition layer with ultraviolet through a photomask having a given pattern to conduct an exposure;
removing an unexposed area of the photosensitive resin composition layer after the exposure by dissolving the unexposed area with a developing liquid to thereby form a core layer; and
forming an overcladding layer on the core layer,
wherein the developing liquid is an aqueous γ-butyrolactone solution having a concentration of from 10 to 99% by weight.

2. The process for producing an optical waveguide according to claim 1, wherein the aqueous γ-butyrolactone solution has a concentration of from 75 to 85% by weight.

3. The process for producing an optical waveguide according to claim 1, wherein the undercladding layer comprises a thermosetting resin or thermoplastic resin.

4. The process for producing an optical waveguide according to claim 1, wherein the undercladding layer comprises an epoxy resin composition.

5. The process for producing an optical waveguide according to claim 1, wherein the photosensitive resin composition layer comprises a photocurable epoxy resin composition.

6. The process for producing an optical waveguide according to claim 1, wherein the overcladding layer comprises a thermosetting resin or thermoplastic resin.

7. The process for producing an optical waveguide according to claim 1, wherein the overcladding layer comprises an epoxy resin composition.
